Europäisches Patentamt

European Patent Office

Office européen des brevets

(19)

(11) Publication number: **0 085 749**
**B1**

(12) **EUROPEAN PATENT SPECIFICATION**

(45) Date of publication of patent specification: **02.08.89**

(51) Int. Cl.⁴: **G 06 K 19/06**

(21) Application number: **82109506.4**

(22) Date of filing: **14.10.82**

(54) Machine readable record.

(30) Priority: **09.02.82 US 347131**

(43) Date of publication of application:
**17.08.83 Bulletin 83/33**

(45) Publication of the grant of the patent:
**02.08.89 Bulletin 89/31**

(84) Designated Contracting States:
**DE FR GB**

(56) References cited:
**WO-A-81/00476**
**US-A-3 845 279**
**US-A-3 963 901**

(73) Proprietor: **International Business Machines Corporation**
**Old Orchard Road**
**Armonk, N.Y. 10504 (US)**

(72) Inventor: **Galatha, Matthew Joseph**
**1646 Cavendish Court**
**Charlotte North Carolina 28211 (US)**

(74) Representative: **Atchley, Martin John Waldegrave**
**IBM United Kingdom Limited Intellectual Property Department Hursley Park**
**Winchester Hampshire SO21 2JN (GB)**

Courier Press, Leamington Spa, England.

## Description

This invention relates to machine readable records.

Automatic processing of financial documents such as bank cheques has been enhanced by the use of machine readable data, such as the well known machine and human readable E13-B and CMC-7 codes, as well as special purpose bar codes. These codes are generally configured to encode individual data items as a time-varying signal which is reproduced as the cheque passes a transducer while moving through a high speed cheque processing machine. The information content of the signal is an interrelated function of both the marking and the transport motion. Most code formats presently in use require a number of successive elements to identify each encoded character. Considering the limited size of most bank cheques, these existing code formats severely restrict the amount of data that can be recorded in a single track along the length of the bank cheque.

There are known code formats, in which characters are represented by one or more markings in a plurality of simultaneously sensed parallel fields. The common 80 column punched card is a well known example. In its simplest form there is one mark per encoded character. A plurality of parallel code zones are provided, one for each member of the encoded character set. Two or more marks may be used to encode many more characters than there are parallel zones. However, a code format that identifies characters by the use of multiple markings may be subject to substitution errors due to the failure to read one of the parallel markings or due to skew of the document which may align marks from adjacent characters. In other words, the markings for one or two characters may be partially common to markings of a different character.

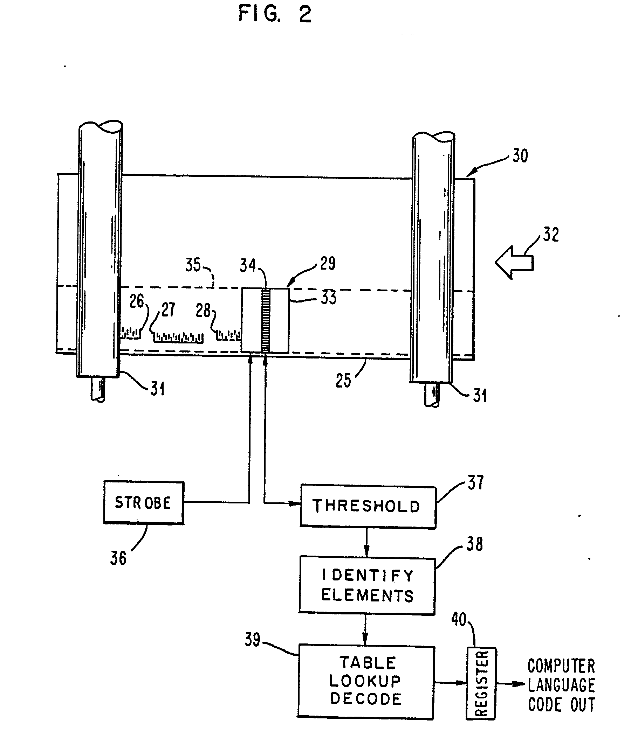

US-A-3 845 279 describes a machine readable record (column 5, lines 9 19) comprising a record base having on a surface thereof a background region of a first optical characteristic and a plurality of mark elements (Figures 2—3) of a second, contrasting optical characteristic. The mark elements are individually arranged in successive spaces which are disposed side-by-side along the direction of movement of the record in a record reading machine. The mark elements are selected from a plurality of different predetermined lengths in their dimension transverse to the direction of movement of the record, and are positioned in selected zones of a predetermined set of equal height zones extending parallel to this direction, whereby each mark element uniquely identifies by its length and location, a character of a predetermined set of characters.

The use of a reference mark extending parallel to the other mark elements is described in WO-A-8 100 476.

The object of the present invention is to provide an improved machine readable record.

The present invention relates to a machine readable record comprising a record base having on a surface thereof a background region of a first optical characteristic and a plurality of mark elements of a second, contrasting, optical characteristic. The mark elements are individually arranged in successive spaces which are disposed side-by-side along the direction of movement of the record in a machine for reading the record, are positioned in selected zones of a predetermined set of equal height zones extending parallel to this direction of movement, and are selected from a plurality of different predetermined lengths in their dimension transverse to the direction of movement. Each mark element uniquely identifies by its length and position a character of a predetermined set of characters.

According to the invention the record is characterised in that each of the different lengths selected differs from the next longer or shorter selected length by at least the height of two zones, there are six zones in the set of zones, only two different lengths for the mark elements are selected to encode a set of ten characters (0 to 9), and the longer of the two lengths is substantially equal to three times the height of one zone.

In a preferred embodiment the mark elements extend transversely across one or three code zones, which run parallel to the scanning direction of the record.

Because each character is represented by a single element, the format provides for a dense encoding such that a series of twentyfour numeric characters can be reliably encoded in the space of approximately 17mm in the direction of record transport through a high-speed processing machine. This dense code format enables a number of sets of mark elements to be placed on a record at different times by different operations in different fields, but within a common processing track.

The code format of the invention maximizes the use of available space with respect to the distinguishable differences between the different members of the code set. To obtain this maximum use of space, it is necessary that the difference between adjacent members. be substantially uniform because the reliability of the code is only as good as its weakest member. Extra space between some adjacent members is wasted space. Uniform orthogonal difference is obtained in the code format by defining equal height code zones and by requiring that each longer marking length exceed the next shorter by at least twice the height of the code zones. The optimum spacing is obtained where the shortest marking element is equal in height to the height of a code zone, and the difference in element length substantially equals twice the height of the code zones.

The embodiment of the coded format provides for the encoding of ten numeric digits by code elements placed in six transverse zones, the longer element occupying three zones and the shorter element occupying a single zone. A coded record of this configuration can be read reliably while requiring a total vertical height of all six zones of only about 4.7mm.

To facilitate the read operation, it is preferred to record a zone reference line that extends the full expanse of the six code zones at the beginning of a series of related code elements. This line is used by a reader to ensure accurate interpretation of the transverse position of the code elements. Other aids to registration can be used instead of or in addition to the zone reference line. For example, a base line running parallel to the zones can assist accurate reading. A segmented base line can also provide a useful reference for locating successive digit code positions.

Because the code format contains no intelligence in the direction of cheque transport, reading of the code is relatively insensitive to spacing differences between code elements in this direction. Variations in scan velocity for example, between a device that originally printed the markings and a different device, operating at a different time, reading the markings, can cause such spacing differences. Furthermore, the code is particularly suited to printing by a multi-nozzle ink jet printer. Because the nozzles of such a printer extend transverse to the cheque transport direction, the transverse location of printing can be quite accurate.

The scope of the invention is defined by the appended claims; and how it can be carried into effect is hereinafter particularly described with reference to the accompanying drawings, in which:

FIGURE 1 is an enlarged layout view of the elements of a preferred embodiment of the code format.

FIGURE 2 is a simplified view of a suitable code reader showing a bank cheque that has been marked with several records using the code format of this invention; and

FIGURE 3 is a graphical demonstration of the uniform orthogonal spacing between adjacent members of the code shown in Fig.1.

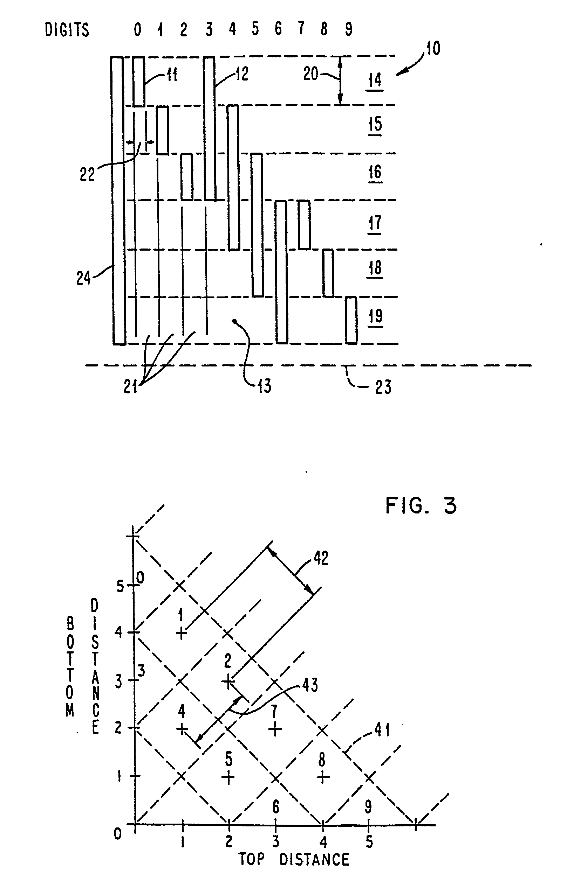

A preferred embodiment of the code format according to the invention for encoding the digits of 0 to 9 comprises for each of the digits or members of the code set, a single short mark element 11 (Fig.1) or a single long mark element 12. The mark elements 11 and 12 have optical properties that contrast with the optical properties of a background region 13 formed by the surface of a document or other record base on which the mark elements have been printed. The mark elements are located in zones 14, 15, 16, 17, 18 and 19, which are each of equal height 20. Each mark element lies within one of a series of successive digit spaces 21 each of which is preferably wider than the width 22 of the mark element, to provide clear division between digits. The spaces 21 are disposed side-by-side along a line 23 which represents the intended direction of relative motion between the code pattern 10 and a reader. Because the characteristic length of the mark elements 11 and 12 is transverse to the direction of reading motion, the code format is relatively insensitive to small variations of either reading or printing motion in the direction of line 23.

Although not an encoded character, it is preferred to employ a zone reference line 24 that defines, by its extremities, the boundaries of zones 14 to 19. Line 24 must be clearly distinguishable in length from the mark elements 11 and 12. By storing the accurate location at which a zone reference line 24 is detected, a code reader can easily compute the location of zones 14 to 19.

The short mark elements 11 are substantially equal in length to the zonal height 20. The long mark elements 12 are longer than the elements 11 by substantially twice the zonal height 20, that is, they are three times the zonal height in length. Thus, short and long mark elements can be reliably distinguished even though distorted, misplaced or misread by up to half the zonal height 20. Because each digit 0 to 9 is represented by a single mark element 11 or 12, the opportunity for substitutions due to poorly executed or read characters is substantially reduced. Any time a reader detects two separate mark elements in a single digit space 21, an error condition is indicated and the document can be sorted to a reject bin for manual processing. For banking applications for which this code is intended, reject reading failures are much more acceptable than substitution failures. Multiple mark elements might be detected in a space 21 due to obliteration of the centre portion of a long mark element 12 or to document skew which vertically aligns adjacent short mark elements 11. Smudged ink could produce the same effect.

Figure 2 shows the back of a bank cheque 25 upon which have been printed several separate digit series records 26, 27 and 28 using the code format of the invention. preferably, the coded records 26, 27 and 28 are printed with an infrared fluorescent ink. The mark elements will in this case react to visible light to.produce infrared radiation which passes a suitable filter to appear bright on a dark background to an infrared detector.

The cheque 25 is shown in a cheque transport 30 having drive rollers 31 which transport the cheque 25 in the direction of arrow 32. Between the rollers 31 is positioned a read station including a typical optical reader 29 for detecting the mark elements 11 and 12 and the zone reference lines 24. The reader 29 includes a solid state scanner 33 having a row of sixtyfour photodiodes 34. Scanner 33 is positioned to view a relatively wide track 35 extending along the length of cheque 25. Track 35 is wider than, and preferably at least twice as wide as, the individual code records 26, 27 and 28, so that the image of the mark elements will be captured regardless of some slight vertical displacement due to the different alignment of different printers creating the markings. The code record 27, for example, is slightly lower than the records 26 and 28.

Photodiode array 34 operates at closely spaced sampling times under the control of a strobe circuit 36 which is synchronized with the cheque transport speed to define relatively uniform periods of displacement of the cheque 25. At each strobe signal from circuit 36, photodiode array 34 delivers to a threshold circuit 37 analog data from each photodiode representing the light received from individual picture elements scanned. Threshold circuit 37 assigns a binary value, 1 or 0, to the picture elements and delivers the thus digitized data to a code-element-identifying operator 38 which relates the received patterns of I's and O's to each other and to data representing the location of zones 14 to 19 to recognize the length and location of elements 11 and 12, as received. Operator 38 presents the element identity, i.e. the mark in zones 14 to 19, to a table-lookup decode operator 39 which has prestored the relationship between the element pattern with respect to zones 14 to 19 to the individual digits represented. Table-lookup decode operator 39 presents a conventional computer language code, representing the identified digit, to an output register 40, for use by a computer system requiring the data from the cheque 25.

The coded record 27 has a base line 41 parallel to the zones and normal to the mark elements to provide accurate registration for reading. The coded record 28 has a similar base line 42 which is segmented at multiples of the spaces 21 to provide references for locating successive digit position.

The uniformity of orthogonal displacement between members of the code is graphically demonstrated in Fig.3. The vertical axis in Fig.3 represents the distance in terms of zonal heights 20, between the bottom of a mark element 11 or 12 and the lower edge of the lowest zone 19. Similarly, the horizontal axis represents the distance between the top of a mark element and upper edge of the topmost zone 14. Each of the elements of the code of Fig.1 have been plotted as indicated by the digits they represent. The distance between adjacent digits shows the amount of distortion necessary for any digit to become confusable with another. The dash lines 41 show the half-way distance between, adjacent digits. The elements can become confused when they are distorted sufficiently so as to cross these lines 41. The uniform strength of all members of the code set is thus shown by the equal distance 42 and 43 between digits 1 and 2, and 2 and 4, respectively.

Those skilled in the art will recognize that various modifications, additions and deletions can be made to the particular embodiment shown without departing from the scope of the invention. For example, larger character sets can be encoded by using three or more different length mark elements so long as the basic rules of the code format are followed.

If a full height reference mark element 24 is used, then a third length mark element of five zone heights would only differ by one zone height. However, if an odd number of zones be used, for example nine, then four different lengths of mark element in addition to the full height may be used, each differing by two zone heights and giving the possibility of coding a set of twentyfour characters, with one full height reference mark element.

## Claims

1. A machine readable record (25) comprising a record base having on a surface thereof a background region of a first optical characteristic and a plurality of mark elements (11, 12) of a second, contrasting, optical characteristic, the mark elements being individually arranged in successive spaces (21) which are disposed side-by-side along the direction (32) of movement of the record in a machine for reading the record, being positioned in selected zones of a predetermined set of equal height zones (14, 15, 16, 17, 18, 19) extending parallel to this direction (32), and being selected from a plurality of different predetermined lengths in their dimension transverse to this direction (32), whereby each mark element uniquely identifies by its length and position a character of a predetermined set of characters, characterised in that each of the different lengths selected differs from the next longer or shorter selected length by at least the height of two zones, there are six zones in the set of zones, only two different lengths for the mark elements are selected to encode a set of ten characters (0 to 9), and the longer of the two lengths is substantially equal to three times the height of one zone.

2. A machine readable record as claimed in Claim 1 characterised in that the shorter of the two lengths is substantially equal to the height of one zone.

## Patentansprüche

1. Maschinell lesbare Aufzeichnung (25) mit einem Aufzeichnungsträger, der auf einer Oberfläche einen Hintergrundbereich mit einer ersten optischen Eigenschaft und eine Vielzahl von Markierungselementen (11, 12) mit einer zweiten, kontrastierenden optischen Eigenschaft besitzt, wobei die Markierungselemente einzeln in aufeinanderfolgenden, Seite an Seite längs der Bewegungsrichtung (32) der Aufzeichnung in einer Maschine zum Lesen der Aufzeichnung verteilten Abständen (21) angeordnet sind, in ausgewählten Zonen eines vorgegebenen Satzes von sich parallel zu dieser Richtung (32) erstrekkenden Zonen (14, 15, 16, 17, 18, 19) gleicher Höhe angeordnet sind und aus einer Vielzahl verschiedener vorgegebener Längen in ihrer Abmessung quer zu dieser Richtung (32) ausgewählt sind, wobei jedes Markierungselement durch seine Länge und Lage eindeutig ein Zeichen aus einem vorgegebenen Zeichensatz kennzeichnet,

dadurch gekennzeichnet, daß sich jede der verschiedenen ausgewählten Längen von der nächst längeren oder kürzeren ausgewählten Länge zumindest um die Höhe von zwei Zonen unterscheidet, wobei in dem Satz von Zonen sechs Zonen vorgesehen sind, zum Codieren eines Satzes von zehn Zeichen (0 bis 9) für die Markierungselemente bloß zwei verschiedene Längen gewählt sind und die längere der beiden Längen im wesentlichen dreimal der Höhe einer Zone gleich ist.

2. Maschinell lesbare Aufzeichnung nach Anspruch 1, dadurch gekennzeichnet, daß die kürzere der beiden Längen im wesentlichen der Höhe einer Zone gleich ist.

**Revendications**

1. Enregistrement lisible par machine (25) comprenant

une base d'enregistrement dont une surface comporte une région de fond, ayant une première caractéristique optique, et une pluralité d'éléments de marque (11,12) ayant une deuxième caractéristique optique en contraste avec la première,

les éléments de marque étant individuellement agencés dans des espaces successifs (21) qui sont disposés côte-à-côte suivant la direction (32) de mouvement de l'enregistrement dans une machine de lecture de l'enregistrement, placés dans des zones choisies d'un ensemble prédéterminé de zones de hauteur égale (14,15,16,17,18,19) s'étendant parallèlement à cette direction (32), et choisis parmi une pluralité de longueurs prédéterminées différentes dans leur dimension transversale à cette direction (32),

de sorte que chaque élément de marque identifie de façon unique, par sa longueur et sa position, un caractère d'un jeu prédéterminé de caractères, caractérisé en ce que

chacune des différentes longueurs choisies diffère de la longueur choisie plus longue ou plus courte suivante par au moins la hauteur de deux zones, il y a six zones dans l'ensemble de zones-deux longueurs différentes seulement sont choisies pour les éléments de marque afin de coder un jeu de dix caractères (0 à 9), et la plus longue des deux longueurs est sensiblement égale au triple de la hauteur d'une zone.

2. Enregistrement lisible par machine suivant la revendication 1, caractérisé en ce que la plus courte des deux longueurs est sensiblement égale à la hauteur d'une zone.

EP 0 085 749 B1

DIGITS 0 1 2 3 4 5 6 7 8 9

FIG. 3

BOTTOM DISTANCE

TOP DISTANCE

FIG. 2